# EUROPÄISCHE PATENTSCHRIFT

(11) **EP 0 492 363 B1**
(45) Veröffentlichungstag und Bekanntmachung des Hinweises auf die Patenterteilung: **24.08.1994**
(21) Anmeldenummer: 91121595.2
(22) Anmeldetag: 17.12.1991
(51) Int. Cl.: B05B 11/00

(54) **Ansaug- und/oder Ausgabeventil für eine Dosier- oder Spraypumpe zur Abgabe flüssiger, niederviskoser und pastöser Stoffe**
Suction and/or exhaust valve for a metering or spray pump for liquids, products with low viscosity and pasty products
Valve d'aspiration et/ou de refoulement pour une pompe de dosage ou de pulvérisation de produits liquides, à basse viscosité et pâteux

(30) Priorität: 21.12.1990 DE 4041135
(43) Veröffentlichungstag der Anmeldung: 01.07.1992
(73) Patentinhaber: Raimund Andris GmbH & Co. KG, D-78052 Villingen-Schwenningen (DE)
(72) Erfinder: Andris, Raimund, D-78052 Villingen-Schwenningen (DE)
(74) Vertreter: Neymeyer, Franz, Dipl.-Ing. (FH)

(56) Entgegenhaltungen:
- WO-A-90/03849
- DE-U- 7 501 055

## Beschreibung

Die Erfindung betrifft ein Ansaug- und/oder Ausgabeventil für eine Dosier- und Spraypumpe zur Abgabe flüssiger oder niederviskoser, insbesondere pastöser Stoffe aus flaschen- oder dosenartigen Behältern, bei der zwei teleskopartig gegeneinander bewegliche Gehäuseteile aus formstabilem Kunststoff eine Pumpkammer aufweisen, deren Volumen durch ein Pumporgan zyklisch veränderbar ist, wobei eine mit einer geschlossenen Stirnwand versehene Ventilringwand mit ihrem offenen Rand umschließend an einer konischen oder kalottenartigen Mantelfläche, die den Ventilsitz bildet, radial elastisch anliegt und in axialer Richtung federnd beweglich mit demjenigen Gehäuseteil verbunden ist, an dem die Mantelfäche angeformt ist.

Es ist bereits eine Waschgel-Dosierpumpe bekannt (DE-U-75 01 055.8), bei der ein in einem Verschlußkolben gelagerter, mit Dichtmanschetten versehener und über einen Betätigungshebel betätigbarer Pumpkolben auf der einen Seite eines konischen Ventilsitzes in einem Pumpzylinder angeordnet ist. Der Pumpkolben ist mittels einer sich am Ventilsitz abstützenden Schraubenfeder nach jedem Pumphub rückstellbar. Auf der anderen Seite ist in einem zylindrischen Hohlraum desselben Zylinders ein axial bewegliches Ventilorgan angeordnet, das mit einer geschlossenen Stirnwand versehen ist und eine Ventilringwand aufweist, welche radial-elastisch dichtend am konischen Ventilsitz anliegt. Zwischen diesem Ventilorgan und einem den Hohlraum schließenden Stopfen ist eine schraubenförmige Druckfeder angeordnet, welche das Ventilorgan gegen den mit einer zentralen Axialbohrung versehenen Ventilsitz drückt.
Abgesehen davon, daß diese bekannte Dosierpumpe nicht als Spraypumpe geeignet ist, hat sie als Massenartikel einen fertigungstechnisch viel zu aufwendigen Aufbau, weil sie aus zu vielen Einzelteilen besteht,. Außerdem erfordern die ineinander gelagerten Verschluß- und Dosierkolben zu hohe Betätigungskräfte.

Bei einer anderen bekannten Dosier- und Spraypumpe (DE-A-38 28 811) ist die an der zylindrischen Mantelfläche eines den Ventilsitz des Ausgabeventils bildenden Ansatzes dichtend anliegende Ventilringwand als Teil eines Faltenbalgs und nur radial elastisch und somit auch nur radial abhebbar. Auch die Ventilringwände der dort in unterschiedlichen Ausführungen vorgesehenen Ausaugventile lassen sich während des Ansaughubs nur in radialer Richtung von den ihren Ventilsitz bildenden zylindrischen Mantelflächen elastisch abheben, damit das angesaugte Medium zwischen der betreffenden Mantelfläche und der sie umschliessenden Ventilringwand in den Innenraum des Faltenbalgs hineinströmen kann.
In der Praxis haben sich derartige Ausgabe- und Ansaugventile für Dosier- und Spraypumpen der gattungsgemäßen Art insbesondere deshalb als unbefriedigend erwiesen, weil einerseits bei ausreichender Schließkraft ein zu großer Öffnungsdruck erforderlich ist und weil andrerseits die Dichtqualität durch Partikel, die sich zwischen die Ventilringwand und die von dieser umschlossenen Mantelfläche setzen können, beeinträchtigt werden kann.
Bei der gegebenen Kleinheit der Teile solcher Pumpen -der Durchmesser eines Faltenbalgs beträgt etwa 12 bis 15 mm und seine Länge etwa 30 mm -, reicht auch oft die Herstellungsgenauigkeit nicht aus, um die erforderliche Schließqualität der Ventile, insbesondere für flüssige Medien, zu gewährleisten. Schon geringe, im Hundertstelmm Bereich liegende Maßabweichungen können zu Ausschuß führen.

Auch die anderen der gleichen Fundstelle entnehmbaren Ausführungsformen von Ansaugventilen, bei denen zungen- oder plättchenartige Schließorgane zum Abdecken von Axialbohrungen vorgesehen sind, genügen nicht den an die Funktionssicherheit solcher Pumpen gestellten Anforderungen.

Die Dicht- bzw. Schließqualität, insbesondere des Ansaugventils, ist auch ausschlaggebend für die Möglichkeit, auf einem Montageautomaten eine trockene Funktionsprüfung durchzuführen, bei der sich diese Ventile als luftdicht erweisen müssen. Zudem werden Behälter, die mit solchen Dosier- und Spraypumpen ausgerüstet sind, sicherheitshalber Falltests unterzogen, bei denen sich die Ventile ebenfalls als zuverlässig schließend erweisen müssen, um zu bestehen.

Eine weitere entscheidende Eigenschaft, die derartige Dosier-und Spraypumpen haben müssen, ist ihre wirtschaftliche Herstellbarkeit. Weil sie in sehr großen Stückzahlen produziert werden, ist es erforderlich, daß sie aus möglichst wenig Einzelteilen mit relativ weiten Maßtoleranzen bestehen, die möglichst einfach montierbar sein sollen.

Der Erfindung liegt deshalb die Aufgabe zu Grunde, für eine Dosier- und Spraypumpe der eingangs genannten Art ein aus möglichst einfachen, leicht montierbaren und auch mit relativ weiten Maßtoleranzen noch zuverlässig arbeitenden Funktionsteilen bestehendes Ventil zu schaffen, das eine hohe Funktionssicherheit, insbesondere eine hohe, auch im trockenen Zustand z.B. auf einem Motageautomaten überprüfbare Schließqualität bei geringer Öffnungskraft aufweist und das sowohl als Ansaugventil wie auch als Ausgabeventil einsetzbar ist.

Gelöst wird diese Aufgabe erfindungsgemäß dadurch, daß die Ventilringwand über eine erste Gruppe von wenigstens drei in Umfangsrichtung verteilt angeordneten, Verbindungsstegen mit einem sowohl in axialer Richtung als auch in radialer Richtung federelastischen Verbindungsring verbunden ist und daß der Verbindungsring über eine zweite Gruppe von ebenfalls wenigstens drei Verbindungsstegen, die gegenüber den Verbindungsstegen der ersten Gruppe in Umfangsrichtung um etwa den halben Winkelabstand, von insbesondere 60°, versetzt sind, einstückig mit einem Montagering verbunden ist, der am Pumporgan oder am Gehäuseteil befestigt ist.

Durch das gleichzeitige Vorhandensein einer radialen Elastizität und einer axialen Elastizität entsteht beim Schließvorgang eines solchen Ventils aus einer zunächst linienförmigen Berührung zwischen der Ventilringwand und der von ihr umschlossenen konischen oder kalottenförmigen Mantelfläche eine flächenhafte Berührung, indem sich der Rand der Ventilringwand in axialer Richtung auf die Mantelfläche schiebt, so daß eventuell dazwischen liegende Partikel weggeschoben werden können. Auch kann sich dabei die Ventilringwand selbst bei Schräglage leicht und besser dichtend der Form der Mantelfläche anpassen.
Durch diese beiden in verschiedenen Richtungen wirksamen Elastizitäten der Ventilringwände wird erreicht, daß sich die Schließkräfte erhöhen, quasi verdoppeln, und die Öffnungskräfte vermindern, quasi halbieren. Auch bezüglich der erforderlichen Fertigungspräzision ist dadurch ein erheblich größerer Spielraum gewonnen.
Das erfindungsgemäße Ventil, das mit bestimmten konstruktiven Voraussetzungen auch als Ausgabeventil verwendbar ist, gewährleistet auch unter ungünstigen Bedingungen eine hohe und zuverlässige Schließqualität, also eine hohe Funktionssicherheit.

Außer diesen funktionellen Vorteilen hat das erfindungsgemäße Ventil noch den bedeutenden Vorzug, daß es sich sowohl bei Pumpen anwenden läßt, die als Pumporgan einen Faltenbalg aufweisen, als auch bei Pumpen, bei denen das Pumporgan aus einem Kolben besteht, der am einen Gehäuseteil befestigt und axial beweglich in einem Zylinder des anderen Gehäuseteils dichtend geführt ist.

Mit der erfindungsgemäßen Ausgestaltung ist die Voraussetzung für eine sowohl spritzgußtechnisch als auch funktionell in jeder Beziehung vorteilhafte Form der maßgebenden Funktionsteile geschaffen, welche die angestrebten Eigenschaften des Ventils weitgehend unabhängig macht von der Beschaffenheit des zu pumpenden Mediums. Außerdem ist durch die gewählten Verbindungselemente zugleich eine für die gewünschte Funktionsweise vorteilhafte hohe Elastizität und funktionelle Flexibilität gewährleistet.

Durch die Ausgestaltung nach Anspruch 2 entfallen besondere Montagearbeiten für das Ausaugventil, und es ist zu seiner Herstellung auch kein separates Spritzwerkzeug erforderlich.

Bei solchen Pumpen, deren Pumporgan als Kolben ausgebildet ist und für bestimmte andere Anwendungsfälle ist die Ausgestaltung nach Anspruch 3 vorteilhaft, insbesondere dann nämlich, wenn z.B. für den Faltenbalg ein anderes Material verwendet werden soll als für die Ventilringwand und/oder wenn das erfindungsgemäße Ventil als Ausgabeventil im Kolben eingesetzt werden soll.

Die Ausgestaltungen der Ansprüche 4 bis 8 begünstigen eine rationelle Herstellung und die funktionsgerechte Schließfunktion des Ansaugventils.

Zu beachten ist auch, daß durch die erfindungsgemäße Lösung eine preiswerte und zudem kompakter bauende Formgebung möglich ist.

Die Erfindung wird im folgenden anhand der Zeichnung näher erläutert. In der Zeichnung zeigt:
- Fig. 1: eine Dosier-und Spraypumpe im Schnitt in Ruhestellung;
- Fig. 2: das Ansaugventil der Dosier- und Spraypumpe aus Fig. 1 in vergrößerter Schnittdarstellung;
- Fig. 3: die Ansicht III aus Fig. 2;
- Fig. 4: das Ansaugventil der Dosier- und Spraypumpe aus Fig. 1 in vergrößerter, teilweise geschnittener Perspektivdarstellung;
- Fig. 5: ein Ansaugventil als separates Einzelteil in analoger Darstellung zu Fig. 4;
- Fig. 6: das Ansaugventil der Fig. 4 als Ausgabeventil im Kopfteil einer anderen Dosier- und Spraypumpe und
- Fig. 7: im Schnitt eine Dosier- und Spraypumpe mit einem Kolben als Pumporgan.

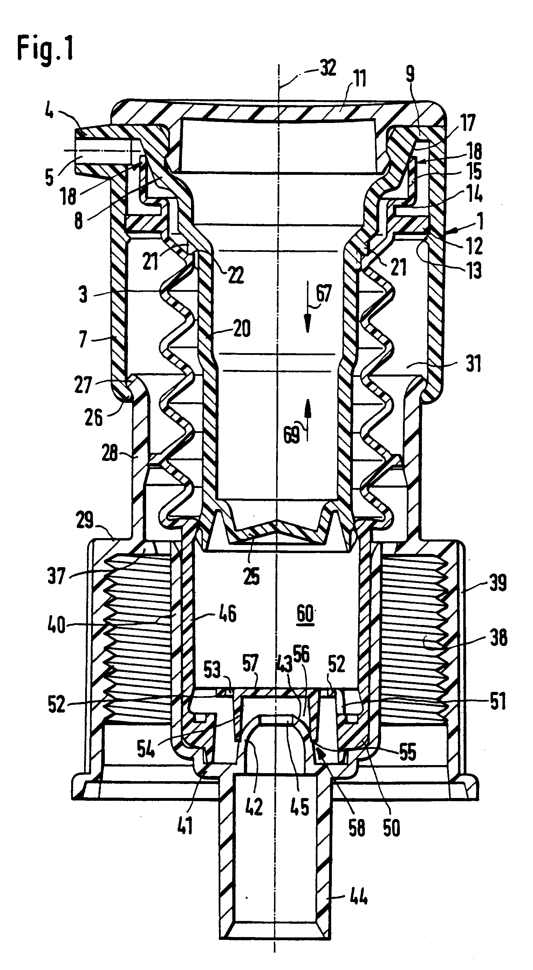

In der Zeichnung sind drei unterschiedliche Dosier- und Spraypumpen dargestellt, die zur Ausgabe flüssiger oder niederviskoser, insbesondere pastöser, Stoffe aus flaschen- oder dosenartigen Behältern dienen. Die Fig. 1, 6 und 7 zeigen sie jeweils in ihrer üblichen Gebrauchslage bzw. Handhabungslage.
Die Dosier- und Spraypumpe der Fig. 1 besteht aus einem oberen ersten Gehäuseteil 1 und einem zweiten unteren Gehäuseteil 2, - wobei oben und unten in der Zeichnung auch der normalen Handhabungslage entsprechen, - sowie aus einem verbindend zwischen diesen beiden Gehäuseteilen 1 und 2 angeordneten Faltenbalg 3.

Während die beiden Gehäuseteile 1, 2 jeweils aus formstabilem Kunststoff hergestellt sind, besteht der Faltenbalg 3 aus einem gummiartig elastischen Kunststoff, dessen Elastizität aber eine ausreichende Formstabilität und andererseits eine ausreichend hohe Rückstellkraft für die Ausgangshübe zu erbringen in der Lage ist.

Sowohl der Faltenbalg 3 als auch die beiden Gehäuseteile 1 und 2 sind jeweils im Spritzgußverfahren einstückig hergestellt.

Das Gehäuseteil 1 ist mit einem seitlich radial vorspringenden, rohrartigen Ausgabemundstück 4 versehen, dessen Ausgabekanal 5 in einer Ringkammer 6 mündet, die zwischen einer äußeren zylindrischen Führungswand 7 und einer inneren, sich nach unten konisch verjüngenden Ringwand 8 angeordnet und durch eine diese beiden verbindende Stirnwand 9 nach oben verschlossen ist. Auf dieser Stirnwand 9 ist mittels einer Rast- oder Schnappverbindung eine mit einem Schnappansatz 10 versehene Verschlußkappe 11 aufgesetzt, die das obere Ende der inneren Ringwand 8 verschließt.

Der Faltenbalg 3 ist am Ende seiner obersten Ringfalte mit einem außen liegenden Dichtring 12 versehen, der unmittelbar oberhalb einer an der Führungswand 7 innen umlaufenden, dünnen Rippe 13 an der Innenfläche dieser Führungswand 7 dichtend anliegt. Oberhalb des äußeren Dichtrings 12 ist eine axial elastische Ringschulter 14 angeordnet, über welche eine im wesentlichen zylindrische und radial elastische Ventilringwand 15 mit dem Faltenbalg 3 bzw. mit dem Dichtring 12 einstückig verbunden ist. Diese Ventilringwand 15 liegt mit ihrer oberen Endkante 16 mit einer gewissen sowohl axial als auch radial wirksamen Vorspannung dichtend an der konischen Mantelfläche 17 der inneren Ringwand 8 an und bildet einerseits im Zusammenwirken mit dieser inneren Ringwand 8 das bewegliche Schließorgan eines Ausgabeventils 18 und andererseits die Trennwand zwischen der Ringkammer 6 und dem Innenraum 19 des Faltenbalgs 3.

Der Innenraum 19 des Faltenbalgs 3 ist weitgehend ausgefüllt durch einen im Durchmesser mehrfach stufenweise abgesetzten, hohlzylindrischen Verdrängungskörper 20, der als Verlängerung einstückig an die innere Ringwand 8 des Gehäuseteils 1 angeformt ist, eine geschlossenen untere Stirnwand 25 aufweist und über seine gesamte Länge ringsum einen radialen Abstand von der Wandung des Faltenbalgs 3 aufweist, damit das auszugebende Medium zwischen dem Verdrängungskörper 20 und der Wandung des Faltenbalgs 3 hindurch strömen kann.

Die Führungswand 7 des Gehäuseteils 1 ist an ihrem unteren Ende mit einem nach innen vorspringenden Ringbund 26 versehen, der formschlüssig einen nach außen vorspringenden Ringbund 27 einer Führungswand 28 des Gehäuseteils 2 so untergreift, daß die beiden Führungswände 7 und 28 teleskopartig ineinander geführt sind und eine teleskopartige axiale Relativbewegung gegeneinander ermöglichen, die einem Pumphub entspricht. Begrenzt wird diese axiale Relativbewegung durch Axialanschläge, die in der einen Richtung von den beiden Ringbünden 26 und 27 gebildet werden und in der anderen Richtung von einer Ringschulter 29 des Gehäuses 2, auf welcher der Ringbund 26 des Gehäuseteils 1 am Ende des Pumphubes aufsitzt.

Die Durchmesser der Ringbünde 26, 27 und die Durchmesser der Führungswände 7, 28 sind so aufeinander abgestimmt, daß einerseits eine ausreichende Führung zwischen den beiden Gehäuseteilen 1 und 2 gewährleistet ist, daß aber andererseits an den jeweiligen Berührungsstellen ein ausreichender Luftaustausch zwischen der Umgebung und dem gemeinsamen Gehäuse-Innenraum 31 bei den Hubbewegungen stattfinden kann.

Die Führungswand 28 ist auf einem Ringsteg 37 des Gehäuseteils 2 wie alle anderen Bestandteile, außer dem Ausgabemundstück 4, konzentrisch zur gemeinsamen Achse 32 einstückig angeformt. Auf dessen axialer Gegenseite ist eine mit einem Innengewinde 38 versehene Aufschraubkappe 39 angeformt, durch welche die gesamte Dosier-und Spraypumpe auf den nicht dargestellten Gewindehals eines dosen- oder flaschenartigen Pasten- oder Flüssigkeitsbehälters aufgeschraubt werden kann.

An den Ringsteg 37 ist außerdem im Innern der Aufschraubkappe 39 konzentrisch ein zylindrischer Topfkörper 40 angeformt, dessen stirnseitige Bodenwand 41 einen zentralen, nippelartig nach oben gerichteten Höhlkörper 42 mit einer Durchlaßbohrung 45 und mit einer kalottenförmigen, als Ventilsitz dienenden Mantelfläche 43 aufweist und der mit einem nach unten gerichteten Ansaugstutzen 44 versehen ist. Letzterer kann zum Ansaugen eines flüssigen Mediums mit einem nicht dargestellten Ausaugschlauch versehen werden.

In diesem Topfkörper 40 sitzt spielfrei passend eine einstückig mit dem Faltenbalg 3 verbundene Zylinderwand 46.

Durch die vorstehend beschriebene Formgebung, die keine zusätzlichen Kosten verursacht, wird überdies eine radial sehr kompakte Bauweise erreicht.

Die Zylinderwand 46 des Faltenbalgs 3 weist einen auf der Bodenwand 41 des Topfkörper 40 aufsitzenden verstärkten Stirnrand 50 auf, an dem eine erste Gruppe von drei axial nach oben gerichteten, in Umfangsrichtung jeweils um 120° zueinander versetzten, fingerartigen Verbindungsstegen 51 angeformt ist. Die oberen Enden dieser Verbindungsstege 51 sind einstückig mit einem sowohl radial als auch axial elastischen Verbindungsring 52 verbunden, der seinerseits durch eine zweite Gruppen von Verbindungsstegen 53, die im wesentlichen radial verlaufen und jeweils um 60° gegenüber den Verbindungsstegen 51 versetzt angebracht sind, mit einer zylindrischen Ventilringwand 54 verbunden und an ihrem oberen Ende mit einer ihren Hohlraum 56 abschließenden Stirnwand 57 versehen ist. Die Ventilringwand 54 ist dünnwandig ausgebildet, und sie sitzt mit ihrer unteren, offenen Randkante 55 radial-elastisch federnd und dichtend auf der kalottenförmigen Mantelfläche 43 des Hohlkörpers 42 auf.
Der Innendurchmesser der Ventilringwand 54 ist etwa doppelt so groß wie der Durchmesser der Durchlaßbohrung 45 aber nur wenig kleiner als der Außendurchmesser des Hohlkörpers 42.

Auf Grund der sowohl radialen als auch axialen Elastizität des Verbindungsringes 52 kann sich die Ventilringwand 54 auch bei ungenauer Fertigung oder schiefer Lage immer dichtend an die Mantelfläche 43 anlegen, auch dann, wenn diese statt kalottenförmig konisch geformt wäre.

Diese Elastizität oder Federeigenschaft des Verbindungsringes 52 stellt auch sicher, daß die Ventilringwand 54 nach einem beendeten Ansaughub wieder selbsttätig in ihre Schließstellung zurückkehrt. Die Mantelfläche 43 des Hohlkörpers 42 und die Ventilringwand 54 bilden somit das Ansaugventil 58 der Dosier-und Spraypumpe.

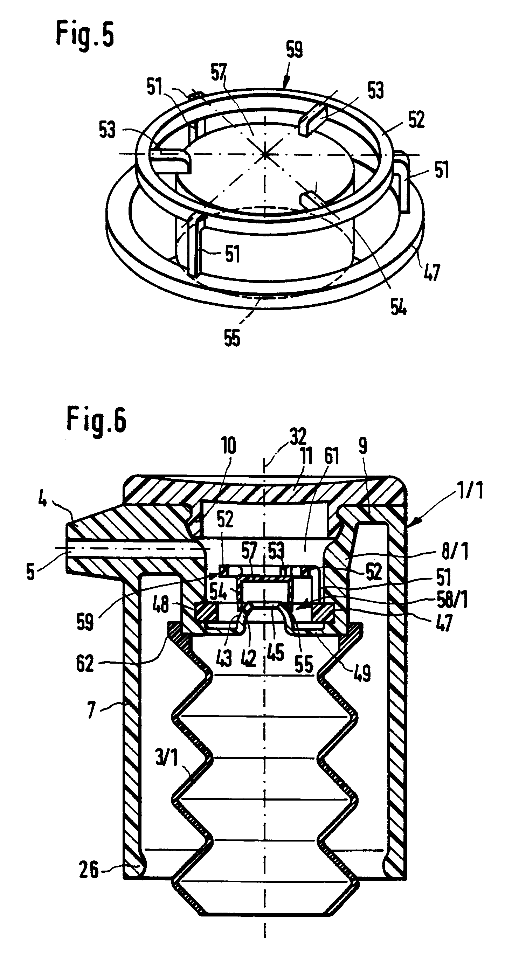

Während bei der vorstehend beschriebenen, bevorzugten Ausführungsform die Ventilringwand 54, die Verbindungsstege 51, 53 und der Verbindungsring 52 einstückig am unteren Stirnrand 50 des Faltenbalgs 3 angeformt sind, ist in Fig. 5 ein Ventilelement 59 mit einer Ventilringwand 54 dargestellt, bei dem die äußeren Verbindungsstege 51 an einem weiteren vorzugsweise stabileren Montagering 47 angeformt sind, der in eine entsprechende Aufnahme des Stirnrandes 50 oder des Topfkörpers 40 eingesetzt werden kann. Die Ventilringwand 54 ist somit zusammen mit den Verbindungsstegen 51, 53, dem Verbindungsring 52 und dem zusätzlichen Montagering 47 als separates Bauteil bzw. Ventilelement 59 hergestellt, das wahlweise als Ansaugventil 58 oder aber, wie in Fig. 6 gezeigt, auch als Ausgabeventil 58/1 in einer Dosier- und Spraypumpe eingesetzt werden kann.

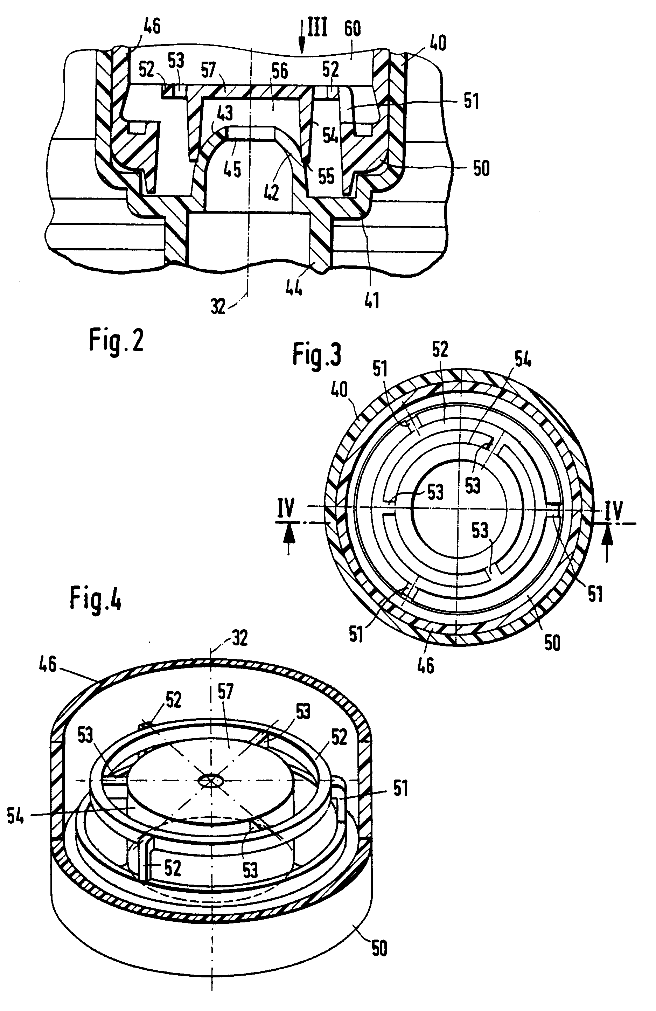

Bei der in den Fig. 5 und 6 dargestellten Ausführungsform des Ventilelements 59 sind die drei radialen Verbindungsstege 53 am Rand der oberen Stirnseite der Ventilringwand 54 angeformt; ein funktioneller Unterschied zu der Ausführungsform der Fig. 1 bis 4 besteht jedoch nicht.

In Fig. 6 ist als erste Variante zur Ausführungsform der Fig. 1 ein oberes erstes Gehäuseteil 1/1 dargestellt, in welches das in Fig. 5 als Einzeilbauteil dargestellte Ventilelement 59, bestehend aus der Ventilringwand 54, den drei radialen Verbindungsstegen 53, dem Verbindungsring 52, den axialen Verbindungsstegen 51 und dem Montagering 47, im Zusammenwirken mit einem kalottenförmigen Hohlkörper 42 als Ausgabeventil eingesetzt ist. Das Gehäuseteil 1/1 unterscheidet sich von dem Gehäuseteil 1 nur dadurch, daß es statt der konischen Ringwand 8 und des Verdrängungskörpers 20 eine etwa hohlzylindrische Ringwand 8/1 mit einer unteren Stirnwand 49 aufweist, an welcher der kalottenförmige Hohlkörper 42 einstückig angeformt ist. Unmittelbar oberhalb dieser Stirnwand 49 ist in eine innere Ringnut 48 der Montagering 47 des Ventilelements 59 formschlüssig eingesetzt, so daß die Ventilringwand 54 mit ihrer unteren Randkante 55 federnd und zugleich dichtend an der Mantelfläche 43 des Hohlkörpers 42 anliegt und mit dieser zusammen das Ausgabeventil 58/1 bildet. Der etwa zylindrische, von der Verschlußkappe 11 nach oben verschlossenen Hohlraum 61 steht unmittelbar mit dem Ausgabekanal 5 in Verbindung.

Auch das obere Ende des Faltenbalgs 3/1 ist anders gestaltet als beim Faltenbalg 3: es ist lediglich mittels eines Falzringes 62 am unteren Rand der Ringwand 8/1 festsitzend befestigt. Im übrigen kann die mit einem solchen ersten Gehäuseteil 1/1 ausgestattete Dosier- und Spraypumpe gleich oder ähnlich ausgebildet sein, wie in Fig. 1 dargestellt.

Die Materialelastizität des Faltenbalgs 3 bewirkt auch eine selbsttätige Rückkehr des ersten Gehäuseteils 1 in seine ausgezogene Ruheposition, sobald keine Axialkraft mehr auf es ausgeübt wird, d.h., wenn es nach einem in Richtung des Pfeiles 67 erfolgten Ausgabehub losgelassen wird. Diese Rückbewegung in Richtung des Pfeiles 69 ist der Ansaughub, während dessen die Ventilringwand 54 axial federnd von der Mantelfläche 43 abgehoben wird, damit Medium aus dem Behälter in den Innenraum 60 der Zylinderwand 46 und der Ringfalten des Faltenbalgs 3 strömen kann.

Weil die Ventilringwand 54 an dem in axialer Richtung elastischen Verbindungsring 52 angeformt ist, ist sie auch in der Lage, axiale Bewegungen relativ zur Mantelfläche 43 des Hohlkörpers 42 auszuführen, so daß die Öffnungs- und Schließvorgänge leichter und schneller erfolgen können.

Durch die in Umfangsrichtung zueinander versetzte Anordnung der beiden Gruppen von Verbindungsstegen 51 und 53 und die Federelastizität des Verbindungsrings 52 wird die funktionell wichtige Eigenschaft erreicht, daß sich die Ventilringwand 54 mit ihrer unteren Randkante 55 immer optimal an die kalottenförmige Mantelfläche 43 des Hohlkörpers 42 anlegen kann.

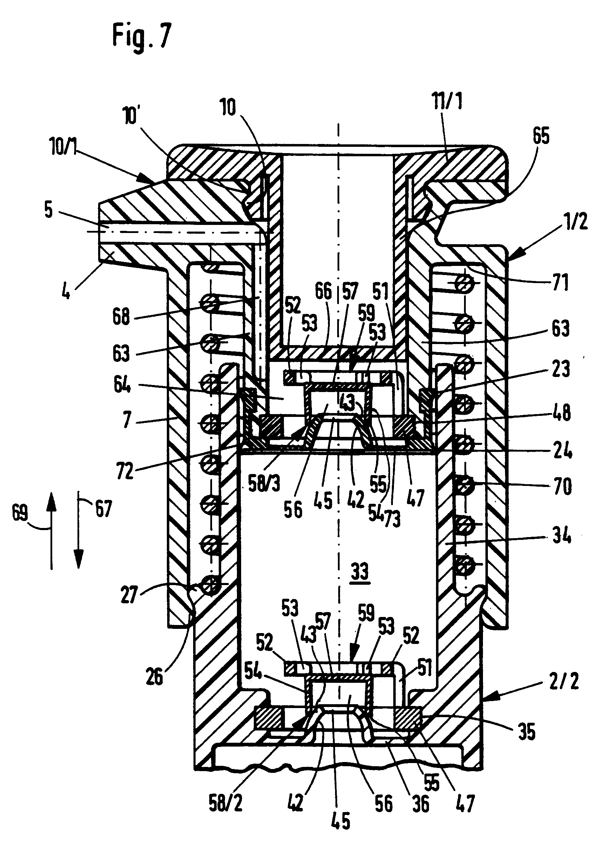

Die Fig. 7 zeigt eine zweite Variante zur Ausführungsform der Fig. 1, bei der als Pumporgan statt eines Faltenbalgs ein Kolben 72 axial beweglich in einem eine Pumpkammer 33 bildenden Zylinder 34 eines zweiten unteren Gehäuseteils 2/2 geführt und mit Dichtringlippen 23, 24 versehen ist. Im unteren Teil der Pumpkammer 33 ist das Ventilelement 59 der Fig. 5 mit seinem Montagering 47 in eine Ringnut 35 des Gehäuseteils 2/2 fixiert eingesetzt, welche in geringem Abstand oberhalb einer Stirnwand 36 angeordnet ist. An dieser Stirnwand 36 des Gehäuses 2/2 ist der Hohlkörper 42 mit seiner zentralen Durchlaßbohrung 45 und seiner kalottenförmigen Mantelfläche 43 einstückig analog zur Ausführungsform der Fig. 1 angeformt, der im Zusammenwirken mit der Ventilringwand 54 des Ventilelements 59 das Ansaugventil 58/2 bildet.

Der Kolben 72 ist festsitzend am unteren Ende einer inneren Zylinderwand 63 des ersten oberen Gehäuseteils 1/2 befestigt, das mit der äußeren Führungswand 7 sowie mit dem Ausgabemundstück 4 und dem Ausgabekanal 5 eine Formeinheit bildet. Der größte Teil des Hohlraums 64 der Zylinderwand 63 ist durch einen passend eingesetzten Hohlzylinder 65 mit einer geschlossenen unteren Stirnwand 66 ausgefüllt. Durch eine Axialnut 68 in der Innenfläche der Zylinderwand 63 steht der Hohlraum 64 mit dem Ausgabekanal 5 in Verbindung.
Der Hohlzylinder 65 ist Bestandteil einer Schließkappe 11/1, die mittels eines Schnappansatzes 10 in einer oberen Erweiterung des Gehäusekopfes 10/1 rastend eingesetzt ist.
Auch hierbei ist der Montagering 47 des Ventilelements 59 in eine Ringnut 48 des oberen ersten Gehäuseteils 1/2 so eingesetzt, daß die Ventilringwand 54 im Zusammenwirken mit der kalottenförmigen Mantelfläche 43 des Hohlkörpers 42 das Ausgabeventil 58/3 bildet.
Damit das Gehäuseteil 1/2 nach einem in Richtung des Pfeiles 69 erfolgten Ausgabehub wieder selbsttätig in seine Ausgangslage zurückkehrt, ist eine Druckfeder 70 zwischen den beiden Gehäuseteilen 1/2 und 2/2 konzentrisch zum Zylinder 34 angeordnet, die sich einerseits am Ringbund 27 des Gehäuseteils 2/2 und andererseits an der inneren Ringschulter 71 des Gehäuseteils 1/2 abstützt.

Bei diesem Ausführungsbeispiel der Fig. 7 dient das erfindungsgemäße Ventil in völlig gleicher Ausführung einmal als Ansaugventil 58/2 und einmal als Ausgabeventil 58/3. Die Funktionsweise ist in allen Fällen gleich. Bei jedem in Richtung des Pfeiles 67 erfolgenden Ausgabehub des Gehäuseteils 1/2 relativ zum stillstehenden Gehäuseteil 2/2 wird durch den erhöhten Druck Medium aus der Pumpkammer 33 durch das Ausgabeventil 58/3 hindurch in den Ausgabekanal 5 befördert. Das untere Ansaugventil 58/2 ist dabei dicht geschlossen.
Während des darauf in Richtung des Pfeiles 69 erfolgenden Ansaughubs wird bei geschlossenem Ausgabeventil 58/3 durch das Ansaugventil 58/2 hindurch Medium aus dem mit dieser Dosier- und Spraypumpe versehenen Behälter ( nicht dargestellt) in die Pumpkammer 33 angesaugt, wonach ein neuer Pumpzyklus erfolgen kann.

Mit der erfindungsgemäßen Gestaltung ist eine Ventilform für Dosier-und Spraypumpe für flüssige und niederviskose bzw. pastöse Stoffe geschaffen, welche eine störungsfreie Pumpfunktion gewährleistet und die sowohl als Anssaugwie auch als Ausgabeventil verwendet werden kann und bei der die problemlos funktionierende Ventilringwand 54 als das wesentliche Funktionselement wahlweise als Einzelbauteil oder als einstückiger Bestandteil eines Faltenbalgs 3 herstellbar ist. Durch die verbesserte Pumpfunktion ist das erfindungsgemäße Ventil bei Dosier- und Spraypumpe auch universell sowohl für flüssige als auch für pastöse Medien einsetzbar.
Das anfängliche Ansaugen von Medium aus eine Behälter erfolgt sicher nach nur wenigen Pumphüben, und es ist eine trocken Funktionskontrolle, insbesondere auf einem Montageautomaten während des Herstellungsprozesses möglich, was zu wesentlich geringeren Kundenreklamationen und Ausfallkosten führt.

## Patentansprüche

1. Ansaug- und/oder Ausgabeventil für eine Dosier- und Spraypumpe zur Abgabe flüssiger oder niederviskoser, insbesondere pastöser, Stoffe aus flaschen- oder dosenartigen Behältern, bei der zwei teleskopartig gegeneinander bewegliche Gehäuseteile (1, 1/1, 2, 2/2) aus formstabilem Kunststoff eine Pumpkammer(33, 60) aufweisen, deren Volumen durch ein Pumporgan(3, 20, 72) veränderbar ist, wobei eine mit einer geschlossenen Stirnwand (57) versehene Ventilringwand (54) mit ihrem offenen Rand (55) umschließend an einer konischen oder kalottenartigen Mantelfläche (43), die den Ventilsitz bildet, radial elastisch anliegt und in axialer Richtung federnd beweglich mit demjenigen Gehäuseteil verbunden ist, an dem die Mantelfäche (43) angeformt ist,
**dadurch gekennzeichnet,**
daß die Ventilringwand (54) über eine erste Gruppe von wenigstens drei in Umfangsrichtung verteilt angeordneten Verbindungsstegen (53) mit einem sowohl in axialer Richtung als auch in radialer Richtung federelastischen Verbindungsring (52) verbunden ist und daß der Verbindungsring (52) über eine zweite Gruppe von ebenfalls wenigstens drei Verbindungsstegen (51), die gegenüber den Verbindungsstegen (53) der ersten Gruppe in Umfangsrichtung um etwa den halben Winkelabstand, von insbesondere 60°, versetzt sind, einstückig mit einem Montagering (47) verbunden ist, der am Pumporgan (3, 72) oder am Gehäuseteil (1, 2; 1/2, 2/2) befestigt ist.

2. Ansaugventil nach Anspruch 1 für eine Dosier- und Spraypumpe mit einem Faltenbalg (3) als Pumporgan, dadurch gekennzeichnet, daß die Ventilringwand (54) über die Verbindungsstege (51, 53) und den Verbindungsring (52) einstückig mit dem Faltenbalg (3) verbunden ist.

3. Ansaug- und/oder Ausgabeventil nach Anspruch 1, dadurch gekennzeichnet, daß der über die Verbindungsstege (51, 53) und den Verbindungsring (52) mit der Ventilringwand (54) einstückig verbundene Montagering (47) in eine passende Aufnahme (48) des Pumporgans (3, 72) oder des Gehäuses (1,2) eingesetzt ist.

4. Ansaug- und/oder Ausgabeventil nach Anspruch 2 oder 3, dadurch gekennzeichnet, daß der Verbindungsring (52) mit dem ausgabeseitigen Endabschnitt der Ventilringwand (54) verbunden ist.

5. Ansaugventil nach Anspruch 2, dadurch gekennzeichnet, daß der ansaugseitige Ventilsitz als nippelartiger Hohlkörper (42) mit einer zentralen Durchlaßbohrung (45) ausgebildet und einstückig am einen Gehäuseteil (2) angeformt ist, derart, daß er in den ansaugseitigen Endabschnitt (50) des Faltenbalgs (3) hineinragt.

6. Ausgabeventil nach Anspruch 1 für eine Dosier- und Spraypumpe mit einem Kolben (72) als Pumporgan, dadurch gekennzeichnet, daß der ausgabeseitige Ventilsitz als nippelförmiger Hohlkörper (42) mit einer zentralen Durchlaßbohrung (45) ausgebildet und einstückig an einer Stirnwand (73) des Kolbens (72) angeformt ist, derart, daß er in Ausgaberichtung gegen die Ventilringwand (54) ragt.

7. Ansaug- und/oder Ausgabeventil nach Anspruch 5 oder 6, dadurch gekennzeichnet, daß der Durchmesser der Ansaugbohrung (45) etwa dem halben Durchmesser der sie umschliessenden Ventilringwand (54) entspricht.

8. Ansaug- und/oder Ausgabeventil nach Anspruch 5 oder 6, dadurch gekennzeichnet, daß der Innendurchmesser der Ventilringwand (54) im Bereich der offenen Randkante (55) nur wenig kleiner ist als der Außendurchmesser des nippelartigen Hohlkörpers (42).

## Claims

1. Inlet and/or outlet valve for a metering and spray pump for the discharge of liquid or low-viscosity, in particular pasty, substances from bottle-like or can-like containers in which two housing parts (1, 1/1, 2, 2/2) which are telescopically movable relative to one another and consist of dimensionally stable plastics material have a pump chamber (33, 60) of which the volume may be varied by a pump member (3, 20, 72), wherein an annular valve wall (54) provided with a closed end wall (57) rests radially elastically with its open edge (55) peripherally on a conical or cap-like external surface (43) which forms the valve seat and is axially resiliently movably connected to the housing part on which the external surface (43) is shaped, characterised in that the annular valve wall (54) is connected via a first group of at least three peripherally distributed connecting webs (53) to an axially and also radially resilient connecting ring (52) and in that the connecting ring (52) is connected via a second group also of at least three connecting webs (51) which are peripherally offset by about half the angular interval, in particular of 60°, from the connecting webs (53) of the first group, integrally to an assembly ring (47) fastened on the pump member (3, 72) or on the housing part (1, 2; 1/2, 2/2).

2. Inlet valve according to Claim 1 for a metering and spray pump with a bellows (3) as pump member, characterised in that the annular valve wall (54) is connected integrally to the bellows (3) via the connecting webs (51, 53) and the connecting ring (52).

3. Inlet and/or outlet valve according to Claim 1, characterised in that the assembly ring (47) integrally connected to the annular valve wall (54) via the connecting webs (51, 53) and the connecting ring (52) is inserted into an appropriate socket (48) in the pump member (3, 72) or the housing (1, 2).

4. Inlet and/or outlet valve according to Claim 2 or 3, characterised in that the connecting ring (52) is connected to the outlet-side end portion of the annular valve wall (54).

5. Inlet valve according to Claim 2, characterised in that the inlet-side valve seat is designed as a nipple-like hollow body (42) with a central bore (45) and is shaped integrally on a housing part (2) such that it penetrates into the inlet-side end portion (50) of the bellows (3).

6. Outlet valve according to Claim 1 for a metering and spray pump with a piston (72) as pump member, characterised in that the outlet-side valve seat is designed as a nipple-shaped hollow body (42) with a central bore (45) and is shaped integrally on an end wall (73) of the piston (72) such that it projects toward the annular valve wall (54) in the outlet direction.

7. Inlet and/or outlet valve according to Claim 5 or 6, characterised in that the diameter of the inlet bore (45) corresponds to roughly half the diameter of the annular valve wall (54) surrounding it.

8. Inlet and/or outlet valve according to Claim 5 or 6, characterised in that the internal diameter of the annular valve wall (54) is only slightly smaller in the region of the open edge (55) than the external diameter of the nipple-like hollow body (42).

## Revendications

1. Soupape d'aspiration et/ou d'émission pour une pompe de dosage et de pulvérisation pour la distribution de produits liquides ou de faible viscosité, en particulier pâteux, contenus dans des récipients du genre bouteille ou boîte dans laquelle deux parties de corps en plastique rigide (1, 1/1, 2, 2/2) s'emboîtant l'une dans l'autre présentent une chambre de pompage (33, 60) dont le volume peut être modifié par un organe de pompage (3, 20, 72), une paroi annulaire obturatrice (54), pourvue d'une paroi frontale pleine (57), s'appuyant élastiquement radialement par son bord libre (55) sur une surface latérale conique ou en forme de calotte (43), qui forme le siège de soupape, en entourant celle-ci, et étant reliée de manière mobile et élastiquement dans la direction axiale à la partie de corps sur laquelle est faite la surface latérale (43), caractérisée par le fait que la paroi annulaire obturatrice (54) est reliée par un premier groupe d'au moins trois bras de liaison (53) également espacés dans la direction circonférentielle à un anneau de liaison (52) élastique à la fois dans la direction axiale et dans la direction radiale, et que cet anneau de liaison (52) est relié par un deuxième groupe également d'au moins trois bras de liaison (51), qui sont décalés dans la direction circonférentielle des bras de liaison (53) du premier groupe d'environ la moitié de l'espacement angulaire de ceux-ci, en particulier de 60°, à un anneau de montage (47) qui est fixé à l'organe de pompage (3, 72) ou à la partie de corps (1, 2 ; 1/2, 2/2).

2. Soupape d'aspiration selon la revendication 1 pour une pompe de dosage et de pulvérisation comportant comme organe de pompage un soufflet (3), caractérisée par le fait que la paroi annulaire obturatrice (54) est reliée au soufflet (3) de façon à faire corps avec celui-ci par les bras de liaison (51, 53) et l'anneau de liaison (52).

3. Soupape d'aspiration et/ou d'émission selon la revendication 1, caractérisée par le fait que l'anneau de montage (47), relié à la paroi annulaire obturatrice (54) de façon à faire corps avec celle-ci par les bras de liaison (51, 53) et l'anneau de liaison (52), est monté dans un logement ajusté à lui (48) fait sur l'organe de pompage (3, 72) ou sur le corps (1, 2).

4. Soupape d'aspiration et/ou d'émission selon l'une des revendications 2 et 3, caractérisée par le fait que l'anneau de liaison (52) est relié à la partie extrême côté émission de la paroi annulaire obturatrice (54).

5. Soupape d'aspiration selon la revendication 2, caractérisée par le fait que le siège de soupape côté aspiration est constitué d'un corps creux du genre mamelon (42) ayant un trou central de passage (45) et est fait sur une partie de corps (2) de façon à faire corps avec celle-ci, de façon telle qu'il entre dans la partie extrême côté aspiration (50) du soufflet (3).

6. Soupape d'émission selon la revendication 1 pour une pompe de dosage et de pulvérisation ayant comme organe de pompage un piston (72), caractérisée par le fait que le siège de soupape côté émission est constitué d'un corps creux en forme de mamelon (42) ayant un trou central de passage (45) et est fait sur une paroi frontale (73) du piston (72) de façon à faire corps avec celle-ci, de façon telle qu'il saille vers la paroi annulaire obturatrice (54) dans la direction d'émission.

7. Soupape d'aspiration et/ou d'émission selon l'une des revendications 5 et 6, caractérisée par le fait que le diamètre du trou d'aspiration (45) correspond à peu près à la moitié du diamètre de la paroi annulaire obturatrice (54) qui entoure celui-ci.

8. Soupape d'aspiration et/ou d'émission selon l'une des revendications 5 et 6, caractérisée par le fait que le diamètre intérieur de la paroi annulaire obturatrice (54) dans la zone du bord libre (55) est seulement un peu inférieur au diamètre extérieur du corps creux du genre mamelon (42).
